# EUROPEAN PATENT APPLICATION

(11) **EP 4 620 566 A1**
(43) Date of publication of application: **24.09.2025**
(21) Application number: 24790808.0
(22) Date of filing: 19.02.2024
(51) Int. Cl.: B01J 23/63, B01J 37/08, B01J 35/61, C01B 3/04, B01D 53/86, B01J 37/02

(54) **RUTHENIUM CATALYST FOR AMMONIA DECOMPOSITION REACTION HAVING EXCELLENT AMMONIA DECOMPOSITION ACTIVITY AND METHOD FOR PRODUCING SAME**

(30) Priority: 05.02.2024 KR 20240017403
(71) Applicant: Wonik Materials Co., Ltd., Cheongju-si, Chungcheongbuk-do 18608 (KR)
(72) Inventor: KWAK, Chan, Suwon-si, Gyeonggi-do 16223 (KR); JIN, Min Ho, Cheongju-si, Chungcheongbuk-do 28124 (KR); LEE, Seung Yong, Cheongju-si, Chungcheongbuk-do 28121 (KR); KIM, Han Seul, Cheongju-si, Chungcheongbuk-do 28115 (KR); LEE, Jun Kyu, Cheongju-si, Chungcheongbuk-do 28116 (KR); NOH, Hye Ryeung, Cheongju-si, Chungcheongbuk-do 28186 (KR)
(74) Representative: Prüfer & Partner mbB Patentanwälte · Rechtsanwälte
(86) International application number: PCT/KR2024/095392
(87) International publication number: WO 2025/170193

(57) **Abstract**

The present invention provides a ruthenium catalyst for ammonia decomposition reaction and a method for producing the same. The ruthenium catalyst exhibits a conversion rate of almost 100% at a reaction temperature of 550°C, further exhibits a conversion rate of 93.6% or higher even at 500°C, and also exhibits a conversion rate of about 60% or higher even at a low reaction temperature of 450°C, so that the catalyst has excellent ammonia decomposition activity and low manufacturing cost and thus is economical for an ammonia decomposition process even in a large-scale decomposition process of a relatively low temperature.

## Description

### [Technical Field]

The present invention relates to a ruthenium catalyst for ammonia decomposition reaction having excellent ammonia decomposition activity, and a method for producing the same.

### [Background Art]

Recently, the problem of rising global temperatures due to global warming caused by the use of fossil fuels has become a major issue. Hydrogen, which produces only water when burned, does not produce CO₂, which is a global warming substance, and does not emit air pollutants, is gaining attention as one of alternative energies to fossil fuels.

However, hydrogen cannot exist alone in nature and exists with other elements. For example, hydrogen exists with nitrogen as ammonia.

Ammonia, which produces only nitrogen and hydrogen when decomposed, has the advantage of being an environmentally friendly hydrogen source, and can be mass-produced industrially. It is also easy to liquefy, making it advantageous for transportation and storage.

The ammonia decomposition reaction is an endothermic reaction in which 2 moles of ammonia are produced into 3 moles of hydrogen, as in Reaction formula 1 below.

[Reaction Formula 1] 2NH₃ ↔ 3H₂ + N₂ (Reaction Enthalpy = 46 KJ/mol)

It is known that the ammonia decomposition as above generally takes place at a high temperature of 500~900°C. However, since the hydrogen conversion rate of ammonia is low, a catalyst is used in the ammonia decomposition reaction to improve the hydrogen conversion rate.

Catalysts for the ammonia decomposition reaction use precious or non-precious metals as active metals. Among precious metal catalysts, ruthenium (Ru) catalyst is reported to be the best, and among non-precious metal catalysts, nickel (Ni) catalyst is reported to be the best.

The catalysts using ruthenium or nickel as active materials use various carriers in an attempt to increase catalytic activity in the ammonia decomposition reaction.

As such carriers, γ-Al₂O₃, activated carbon, lanthanum-CeO₂ composite oxide, CeO₂, ZrO₂ corrected with Ba, graphene nano composite compounds, SmCeOx, SiC, etc. are known.

However, even if many carriers as above are used to increase the activity of metals such as ruthenium and nickel, there are still problems in terms of activity, cost, or mass production.

Therefore, there is a need to develop an ammonia decomposition reaction catalyst that has high activity and low manufacturing cost even in a large-scale decomposition process, making it economical for the ammonia decomposition process.

### [Disclosure]

### [Technical Problem]

The present invention is intended to provide a ruthenium catalyst for ammonia decomposition reaction, which has excellent ammonia decomposition activity and low manufacturing cost and thus is economical for an ammonia decomposition process even in a large-scale decomposition process, and a method for producing the same.

The problems to be solved by the present invention are not limited to the above-mentioned problems, and other problems not mentioned will be clearly understood by those skilled in the art from the description below.

### [Technical Solution]

The present invention provides a ruthenium catalyst for ammonia decomposition reaction having excellent ammonia decomposition activity, and a method for producing the same.

Specifically, the ruthenium catalyst for ammonia decomposition reaction having excellent ammonia decomposition activity according to the present invention is a catalyst that includes lanthanum-doped alumina as a carrier and uses ruthenium as an active metal.

The carrier, lanthanum-doped alumina, includes lanthanum aluminate (LaAlO₃) having a perovskite structure.

With respect to the lanthanum aluminate (LaAlO₃) of lanthanum-doped alumina which is the carrier, lanthanum may be contained in an amount of 12 mol% to 19 mol%.

The ammonia decomposition reaction ruthenium catalyst (Ru-LaAlO₃) having excellent ammonia decomposition activity of the present invention uses ruthenium (Ru) as the active metal in the carrier of lanthanum-doped alumina, so that ruthenium (Ru) is contained in the carrier, lanthanum-doped alumina.

The amount of ruthenium in the ruthenium catalyst (Ru/LaAlO₃) for ammonia decomposition reaction may be 0.5 wt% to 5 wt%.

The BET surface area (m²/g) of ruthenium in the ruthenium catalyst for ammonia decomposition reaction has a range of "50 to 93".

In addition, a method for producing a ruthenium catalyst for ammonia decomposition reaction according to the present invention includes:
a) a step of producing a lanthanum-doped alumina carrier including lanthanum aluminate (LaAlO₃) having a perovskite structure by doping lanthanum into alumina ('first step of producing a lanthanum aluminate carrier'); and
b) a step of obtaining an ammonia decomposition reaction ruthenium catalyst having excellent ammonia decomposition activity in which ruthenium is supported on lanthanum aluminate by providing ruthenium to the lanthanum aluminate carrier ('second step of producing the ammonia decomposition reaction ruthenium catalyst having excellent ammonia decomposition activity').

Specifically, the first step of producing the lanthanum aluminate carrier includes:
i) a step of preparing a lanthanum aqueous solution of a lanthanum precursor compound and water ('first-first step of preparing the lanthanum aqueous solution');
ii) a step of obtaining lanthanum-doped alumina by mixing the lanthanum aqueous solution with alumina and then performing a heating reaction and removing water ('first-second step of obtaining the lanthanum-doped alumina'); and
iii) a step of obtaining a carrier of lanthanum aluminate by drying and calcining the obtained lanthanum-doped alumina ('first-third step of obtaining the lanthanum aluminate carrier').

In the first-first step, the ratio (parts by weight) of lanthanum precursor compound to water used may be 1: 2 to 1:20.

In the first-second step, the amount of alumina used may be 3.5 to 7 times (molar ratio) the amount of lanthanum (La) in the lanthanum precursor compound of the first-first step.

When the molar ratio of alumina and lanthanum (La) is used as above, the lanthanum (La) may be included in an amount of 12 mol% to 19 mol% with respect to the lanthanum aluminate carrier obtained in the first-third step.

The heating reaction in the first-second step may be performed at 50°C to 100°C for 1 to 10 hours.

In addition, the removal of water in the first-second step may be performed by ① reducing pressure in the heating reaction or (2) using a filter for a product, which is alumina impregnated with lanthanum, after the heating reaction.

In the first-third step, the drying may be performed at 100°C to 200°C for 1 to 24 hours, and the calcining may include (a) primary calcining at 200°C to 500°C for 5 to 12 hours, and (b) secondary calcining at 500°C to 1200°C for 1 to 10 hours.

Specifically, the second step of producing the catalyst includes:
i) a step of producing a ruthenium precursor compound solution by dissolving a ruthenium precursor compound in a mixed solvent of water and alcohol ('second-first step of producing the ruthenium precursor compound solution');
ii) a step of producing a ruthenium-doped lanthanum aluminate pellet by mixing the lanthanum aluminate (LaAlO₃) carrier obtained in the first-third step into the produced solution and then removing the solvent contained in the solution using a reduced pressure distillation unit at a constant temperature ('second-second step of producing the ruthenium-doped lanthanum aluminate pellet'); and
iii) a step of obtaining an ammonia decomposition reaction ruthenium catalyst (Ru-LaAlO₃) having excellent ammonia decomposition activity in which ruthenium is supported on lanthanum aluminate by drying and reducing the ruthenium-doped lanthanum aluminate pellet ('second-third step of obtaining the ruthenium catalyst').

In the second-first step, the ruthenium precursor compound may be ruthenium chloride, ruthenium nitride, ruthenium acetylacetonate, or ruthenium iodide.

In the second-first step, the volume ratio of water to alcohol may be 1:0.5 to 1:1.5.

In the second-first step, the alcohol may be at least one selected from the group consisting of methanol, ethanol, propanol, butanol, glycerol, glycol, ethylene glycol, diethylene glycol, triethylene glycol, butanediol, tetraethylene glycol, propylene glycol, polyethylene glycol, polypropylene glycol, 1,2-pentadiol, and 1,2-hexadiol.

In the second-first step, the amount of the mixed solution of water and alcohol used may be 50 to 200 times (weight ratio) relative to 1 part by weight of the ruthenium precursor compound.

In the second-first step, the dissolving may be performed at 50°C to 100°C.

In the second-first step, the ruthenium precursor compound may be used in an amount of 1 to 40 parts by weight relative to 100 parts by weight of the lanthanum aluminate carrier.

The amount of the ruthenium precursor compound used for the lanthanum aluminate carrier, and ruthenium in the ruthenium catalyst for ammonia decomposition reaction obtained through the drying and reducing in the second-third step, may be included in an amount of 0.5 to 5 wt% relative to the entire ruthenium catalyst for ammonia decomposition reaction.

In the second-second step, the temperature of the reduced pressure distillation unit for solvent removal may be 50°C to 150°C, and the solvent may be gradually removed for 1 to 5 hours.

In the second-third step, the drying of the ruthenium-doped lanthanum aluminate pellet may be performed using a typical dryer at a temperature of 100°C to 200°C for 5 to 24 hours, and the reducing may be performed by filling the ruthenium-doped lanthanum aluminate pellet in a tubular furnace and then treating the pellet at 500°C to 1,500°C for 1 to 5 hours using hydrogen gas.

The hydrogen gas may be used by being diluted in an inert gas such as nitrogen at 1 to 20 vol%.

As described above, by producing the carrier in the first-first step to the first-third step and doping ruthenium into the carrier in the second-first step to the second-third step, the ruthenium catalyst for ammonia decomposition reaction having excellent ammonia decomposition activity of the present invention is produced.

### [Advantageous Effects]

According to the present invention, there is an advantage in that it is possible to develop an ammonia decomposition reaction ruthenium catalyst having excellent ammonia decomposition activity that is highly active even in a large-scale decomposition process and has low manufacturing cost, thereby making the ammonia decomposition process economically feasible.

### [Description of Drawings]

FIG. 1 is a diagram showing the production of a carrier used in an ammonia decomposition reaction ruthenium catalyst having excellent ammonia decomposition activity according to the present invention.
FIG. 2 is a graph showing the hydrogen conversion rates according to the ammonia decomposition reaction ruthenium catalysts produced in first to third embodiments of the present invention and first and second comparative examples.

### [Best Mode]

Hereinafter, the present invention will be described with reference to preferred embodiments and drawings so that those skilled in the art can easily implement the invention. In the following description of the present invention, well known techniques may not be described or illustrated in detail to avoid unnecessarily obscuring the subject matter of the present invention.

The present invention can be modified in various ways and may have various embodiments, and thus specific embodiments will be described in detail in the following description. However, this is not intended to limit the present invention to the specific embodiments, and should be understood to include all modifications, equivalents, or substitutes of the subject matter and technical scope of the present invention. In addition, throughout the description, when a certain part is stated to "include" a certain element, this does not mean that other elements are excluded, but that other elements may be included, unless specifically stated otherwise.

Terms used herein are merely used to describe a specific embodiment and do not limit the present invention. Singular expressions may include plural expressions unless the context clearly dictates otherwise. In the description, the terms "comprise", "include", "have", etc. are intended to specify the presence of features, numerals, steps, operations, elements, components, or combinations thereof, which are disclosed herein, and should not be construed to preclude the presence or addition of other features, numerals, steps, operations, elements, components, or combinations thereof.

Terms used herein are merely used to describe a specific embodiment and do not limit the present invention. Singular expressions may include plural expressions unless the context clearly dictates otherwise. In the description, the terms "comprise", "include", "have", etc. are intended to specify the presence of features, numerals, steps, operations, elements, components, or combinations thereof, which are disclosed herein, and should not be construed to preclude the presence or addition of other features, numerals, steps, operations, elements, components, or combinations thereof.

The present invention relates to a ruthenium catalyst for ammonia decomposition reaction having excellent ammonia decomposition activity, and a method for producing the same.

One embodiment of the present invention relates to an ammonia decomposition reaction ruthenium catalyst having excellent ammonia decomposition activity.

Specifically, the ammonia decomposition reaction ruthenium catalyst (Ru-LaAlO₃) having excellent ammonia decomposition activity of the present invention uses ruthenium (Ru) as an active metal in a carrier of lanthanum-doped alumina, so that ruthenium (Ru) is contained in the carrier, lanthanum-doped alumina.

The carrier, lanthanum-doped alumina, includes lanthanum aluminate (LaAlO₃) having a perovskite structure.

With respect to lanthanum aluminate (LaAlO₃), which is a lanthanum-doped alumina carrier, lanthanum may be contained in an amount of 12 mol% to 19 mol%. Preferably, it may be 13 mol% to 19 mol%, and more preferably, it may be 13 mol% to 18 mol%.

That is, the ruthenium catalyst (Ru-LaAlO₃) for ammonia decomposition reaction having excellent ammonia decomposition activity of the present invention uses ruthenium (Ru) as an active metal for ammonia decomposition in the carrier of lanthanum aluminate (LaAlO₃) containing 12 mol% to 19 mol% of lanthanum, preferably 13 mol% to 19 mol%, and more preferably 13 mol% to 18 mol%, so that ruthenium (Ru) is contained in the carrier.

The amount of ruthenium in the ammonia decomposition reaction ruthenium catalyst (Ru/LaAlO₃) may be 0.5 wt% to 5 wt%.

In addition, the BET surface area (m²/g) of the ammonia decomposition reaction ruthenium catalyst having excellent ammonia decomposition activity of the present invention has a range of "50 to 93" and preferably has a range of "60 to 93".

Another embodiment of the present invention relates to a method for producing a ruthenium catalyst for ammonia decomposition reaction having excellent ammonia decomposition activity.

Specifically, the method for producing the ammonia decomposition reaction ruthenium catalyst having excellent ammonia decomposition activity of the present invention includes:
a) a step of producing a lanthanum-doped alumina carrier including lanthanum aluminate (LaAlO₃) having a perovskite structure by doping lanthanum into alumina ('first step of producing a lanthanum aluminate carrier'); and
b) a step of obtaining an ammonia decomposition reaction ruthenium catalyst having excellent ammonia decomposition activity in which ruthenium is supported on lanthanum aluminate by providing ruthenium to the lanthanum aluminate carrier ('second step of producing the ammonia decomposition reaction ruthenium catalyst having excellent ammonia decomposition activity').

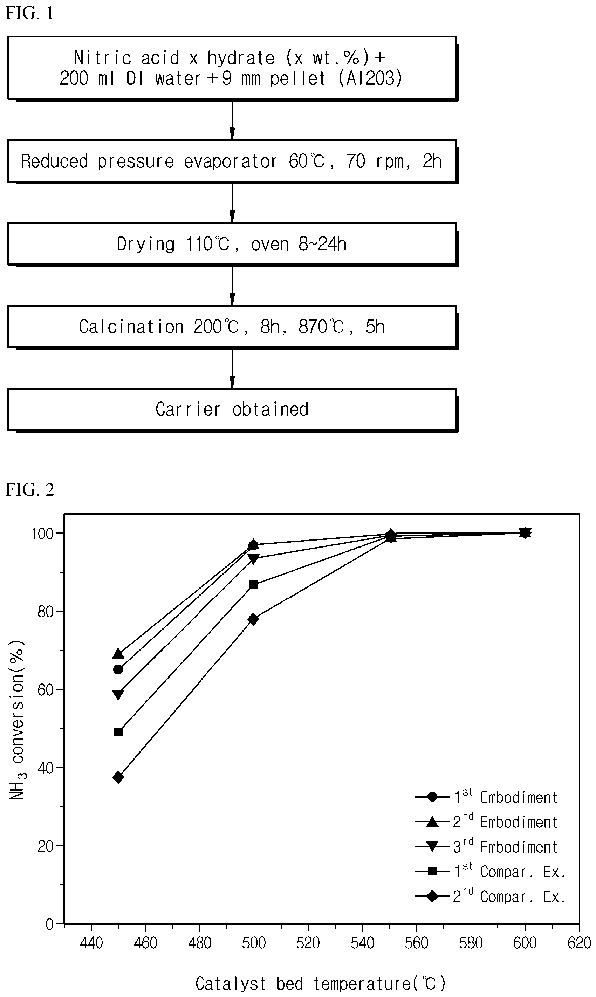

Specifically, the first step of producing the lanthanum aluminate (LaAlO₃) carrier includes:
i) a step of preparing a lanthanum aqueous solution of a lanthanum precursor compound and water ('first-first step of preparing the lanthanum aqueous solution');
ii) a step of obtaining lanthanum-doped alumina by mixing the lanthanum aqueous solution with alumina and then performing a heating reaction and removing water ('first-second step of obtaining the lanthanum-doped alumina'); and
iii) a step of obtaining a carrier of lanthanum aluminate by drying and calcining the obtained lanthanum-doped alumina ('first-third step of obtaining the lanthanum aluminate carrier') (see FIG. 1).

In the first-first step, the ratio (parts by weight) of lanthanum precursor compound to water used may be 1: 2 to 1:20, preferably 1:5 to 15.

In the first-first step, the preparation of the lanthanum aqueous solution may be performed at 50°C to 100°C, preferably 50°C to 80°C.

In the first-second step, the amount of alumina used may be 3.5 to 7 times (molar ratio) the amount of lanthanum (La) in the lanthanum precursor compound of the first-first step.

The alumina may be used in the form of powder or pellets, preferably in the form of pellets.

When the molar ratio of alumina and lanthanum (La) is used as described above, the lanthanum (La) may be included in an amount of 12 mol% to 19 mol% with respect to the lanthanum aluminate carrier obtained in the first-third step.

The heating reaction in the first-second step may be performed at 50°C to 100°C for 1 to 10 hours, and preferably at 50°C to 80°C for 1 to 5 hours.

In addition, the removal of water in the first-second step may be performed by ① reducing pressure in the heating reaction or (2) using a filter for a product, which is alumina impregnated with lanthanum, after the heating reaction.

The reduced pressure of the water removal in the first-second step may be 1000 mbar to 40 mbar.

In the first-third step, the drying may be performed at 100°C to 200°C for 1 to 24 hours, and the calcining may include (a) primary calcining at 200°C to 500°C for 5 to 12 hours, and (b) secondary calcining at 500°C to 1200°C for 1 to 10 hours.

Preferably, in the first-third step, the drying may be performed at 100°C to 150°C for 5 to 15 hours, and the calcining may include (a) primary calcining at 150°C to 350°C for 5 to 10 hours, and (b) secondary calcining at 600°C to 1000°C for 2 to 7 hours.

Specifically, the second step of producing the catalyst includes:
i) a step of producing a ruthenium precursor compound solution by dissolving a ruthenium precursor compound in a mixed solvent of water and alcohol ('second-first step of producing the ruthenium precursor compound solution');
ii) a step of producing a ruthenium-doped lanthanum aluminate pellet by mixing the lanthanum aluminate (LaAlO₃) carrier obtained in the first-third step into the produced solution and then removing the solvent contained in the solution using a reduced pressure distillation unit at a constant temperature ('second-second step of producing the ruthenium-doped lanthanum aluminate pellet'); and
iii) a step of obtaining an ammonia decomposition reaction ruthenium catalyst (Ru-LaAlO₃) having excellent ammonia decomposition activity in which ruthenium is supported on lanthanum aluminate by drying and reducing the ruthenium-doped lanthanum aluminate pellet ('second-third step of obtaining the ruthenium catalyst').

In the second-first step, the ruthenium precursor compound may be ruthenium chloride, ruthenium nitride, ruthenium acetylacetonate, or ruthenium iodide, and preferably ruthenium chloride.

In the second-first step, the alcohol may be at least one selected from the group consisting of methanol, ethanol, propanol, butanol, glycerol, glycol, ethylene glycol, diethylene glycol, triethylene glycol, butanediol, tetraethylene glycol, propylene glycol, polyethylene glycol, polypropylene glycol, 1,2-pentadiol, and 1,2-hexadiol.

In the second-first step, the alcohol may be at least one selected from the group consisting of ethanol, propanol, ethylene glycol, and diethylene glycol.

In the second-first step, the volume ratio of water to alcohol may be 1:0.5 to 1:1.5, and preferably 1:1.

In the second-first step, the amount of the mixed solution of water and alcohol used may be 50 to 200 times (weight ratio) relative to 1 part by weight of the ruthenium precursor compound, and preferably 70 to 150 times (weight ratio).

By mixing alcohol in water as described above, the ruthenium precursor compound can be uniformly dispersed, so that ruthenium which is an active metal for ammonia decomposition can be uniformly dispersed and doped in the carrier of lanthanum aluminate.

In the second-first step, the dissolving is performed at 50°C to 100°C, and preferably at 50°C to 80°C.

In the second-first step, the ruthenium precursor compound can be used in an amount of 1 to 40 parts by weight relative to 100 parts by weight of the lanthanum aluminate carrier, and preferably 5 to 20 parts by weight.

The amount of the ruthenium precursor compound used for the lanthanum aluminate carrier, and ruthenium in the ruthenium catalyst for ammonia decomposition reaction obtained through the drying and reducing in the second-third step, can be included in an amount of 0.5 to 5 wt% relative to the entire ruthenium catalyst for ammonia decomposition reaction.

In the second-second step, the temperature of the reduced pressure distillation unit for solvent removal is 50°C to 150°C, preferably 50°C to 100°C, and the solvent is gradually removed over a solvent removal time of 1 to 5 hours.

In the second-second step, the pressure of the reduced pressure distillation unit may be 1,000 mbar to 40 mbar.

In the second-third step, the drying of the ruthenium-doped lanthanum aluminate pellet is performed using a typical dryer at a temperature of 100°C to 200°C for 5 to 24 hours, and the reducing is performed by filling the ruthenium-doped lanthanum aluminate pellet in a tubular furnace and then treating it at 500°C to 1,500°C for 1 to 5 hours using hydrogen gas.

Preferably, in the second-third step, the drying of the ruthenium-doped lanthanum aluminate pellet is performed in a typical dryer at a temperature of 100°C to 150°C for 5 to 15 hours, and the reducing is performed by filling the ruthenium-doped lanthanum aluminate pellet in a tubular furnace and treating it at 500°C to 1,000°C for 1 to 5 hours using hydrogen gas.

The hydrogen gas is used by being diluted in an inert gas such as nitrogen at 1 to 20 vol%, preferably 1 to 10 vol%.

As described above, by producing the carrier in the first-first step to the first-third step and doping ruthenium into the carrier in the second-first step to the second-third step, the ruthenium catalyst for ammonia decomposition reaction having excellent ammonia decomposition activity of the present invention is produced.

### [Mode for Invention]

Hereinafter, the present invention will be described using specific embodiments and comparative examples.

### <First Embodiment>

29.28 g (67.6 mmol) of lanthanum nitrate hydrate was added to 250 ml of pure water in a top-bottom separation reactor, and dissolved at 60°C for 20 minutes to prepare a lanthanum aqueous solution. Then, 40 g (392.3 mmol) of a cylindrical alumina pellet having an inner diameter of 3 mm, an outer diameter of 9 mm, and a height of 12 mm was added to the prepared lanthanum aqueous solution. After it was placed in a reduced pressure distillation unit, distillation was performed at 70°C for 2 hours while pressure was gradually reduced from 1000 mbar to 70 mbar. As a result, a pellet impregnated with lanthanum was recovered.

The recovered pellet was dried in a typical dryer at a temperature of 110°C for 12 hours, then transferred to a crucible and placed in an electric furnace, where it was calcined stepwise at 200°C for 8 hours and at 900°C for 5 hours to obtain 48.5 g of a carrier (98.6% yield).

The ICP analysis result of the obtained carrier showed that the impregnation amount of lanthanum (La) in the carrier was 13.5 mol%.

Meanwhile, in another top-bottom separation reactor, 2.55 g (12.3 mmol) of ruthenium chloride was dissolved in a solution containing 125 ml of pure water and 125 ml of ethanol at 60°C for 10 minutes, and then 40.4 g of the obtained carrier pellet was added thereto. In a reduced pressure distillation unit, distillation was performed at 70°C for 3 hours while pressure was gradually reduced from 1000 mbar to 40 mbar. As a result, a pellet impregnated with ruthenium was produced. The produced and recovered ruthenium-impregnated pellet was dried in a typical dryer at a temperature of 110°C for 12 hours, then filled into a tubular furnace and reduced at 730°C for 2 hours using 5 vol% hydrogen gas (diluted with nitrogen) to obtain 40.8 g (98.0% yield) of an ammonia decomposition reaction ruthenium catalyst having excellent ammonia decomposition activity.

The ICP analysis result of the produced catalyst showed that the impregnation amount of ruthenium (Ru) in the ruthenium catalyst for ammonia decomposition reaction having excellent ammonia decomposition activity was 0.97 wt%.

The ICP analysis for measuring the impregnation amount of lanthanum (La) element in the carrier and the content of ruthenium (Ru) element in the catalyst was carried out using an inductively coupled plasma atomic emission spectrometer of the iCAP 7400 instrument of Thermo Scientific. The above measurement was made after hydrochloric acid was added to each of the carrier and the catalyst of the first embodiment and then dissolved by ultrasonication.

In the second and third embodiments and the first and second comparative examples below, the ICP analysis for measuring the impregnation amount of lanthanum (La) element in the carrier and the content of ruthenium (Ru) element in the catalyst was performed in the same manner as above.

### <Second Embodiment>

A carrier was produced in the same manner as in the first embodiment except that 30.66 g (70.8 mmol) of lanthanum nitrate hydrate was used, and the ICP analysis result of the produced carrier showed that the impregnation amount of lanthanum (La) in the carrier was 16.9 mol%.

Using the carrier, a ruthenium catalyst for ammonia decomposition reaction with excellent ammonia decomposition activity was produced in the same method as that of the first embodiment.

The ICP analysis result of the produced catalyst showed that the impregnation amount of ruthenium (Ru) in the ruthenium catalyst for ammonia decomposition reaction with excellent ammonia decomposition activity was 1.04 wt%.

### <Third Embodiment>

A carrier was produced in the same manner as in the first embodiment except that 31.20 g (72.1 mmol) of lanthanum nitrate hydrate was used, and the ICP analysis result of the produced carrier showed that the impregnation amount of lanthanum (La) in the carrier was 18.2 mol%.

Using the carrier, a ruthenium catalyst for ammonia decomposition reaction with excellent ammonia decomposition activity was produced in the same method as that of the first embodiment.

The ICP analysis result of the produced catalyst showed that the impregnation amount of ruthenium (Ru) in the ruthenium catalyst for ammonia decomposition reaction with excellent ammonia decomposition activity was 1.01 wt%.

### <First Comparative Example>

A carrier was produced in the same manner as in the first embodiment except that 22.5 g (52.0 mmol) of lanthanum nitrate hydrate was used, and the ICP analysis result of the produced carrier showed that the impregnation amount of lanthanum (La) in the carrier was 11.9 mol%.

Using the carrier, a ruthenium catalyst for ammonia decomposition reaction with excellent ammonia decomposition activity was produced in the same method as that of the first embodiment.

The ICP analysis result of the produced catalyst showed that the impregnation amount of ruthenium (Ru) in the ruthenium catalyst for ammonia decomposition reaction with excellent ammonia decomposition activity was 0.91 wt%.

### <Second Comparative Example>

A carrier was produced in the same manner as in the first embodiment except that 54.5 g (125.9 mmol) of lanthanum nitrate hydrate was used, and the ICP analysis result of the produced carrier showed that the impregnation amount of lanthanum (La) in the carrier was 20.4 mol%.

Using the carrier, a ruthenium catalyst for ammonia decomposition reaction with excellent ammonia decomposition activity was produced in the same method as that of the first embodiment.

The ICP analysis result of the produced catalyst showed that the impregnation amount of ruthenium (Ru) in the ruthenium catalyst for ammonia decomposition reaction with excellent ammonia decomposition activity was 0.95 wt%.

### <Characteristics of BET surface area (m²/g) and total pore volume (cm³/g) according to surface area analysis of ruthenium catalyst for ammonia decomposition reaction >

Table 1 below shows the BET surface area (m²/g) and total pore volume (cm³/g) according to surface area analysis of ruthenium catalyst for ammonia decomposition reaction produced in the above-described first to third embodiments and first and second comparative examples.

The BET surface area and total pore volume are the results of analyzing the specific surface area, etc. through physical adsorption of nitrogen gas by using the Tristar II 3020 model of Micromeritics.

For the above analysis, the pretreatment of the catalysts produced by the first to third embodiments and first and second comparative examples was performed at 150°C for 4 hours under vacuum using VacPrep 061, vacuum type.

The specific surface area of the catalyst was measured using the Brunauer Emmett, and Teller (BET) equation at a temperature of -196°C of liquid nitrogen (purity 99.999%) within the range of the isothermal adsorption/desorption rate of nitrogen gas P/P0 = 0.005 ~ 0.995.

The total pore volume was calculated with the adsorption amount of nitrogen at P/P0 = 0.99.

**[Table 1]**

| | BET surface area (m²/g) | Total pore volume (cm³/g) |
|---|---|---|
| 1^{st} embodiment | 92.5 | 0.39 |
| 2^{nd} embodiment | 71.3 | 0.31 |
| 3^{rd} embodiment | 64.3 | 0.29 |
| 1^{st} comparative example | 93.5 | 0.39 |
| 2^{nd} comparative example | 46.9 | 0.24 |

As shown in Table 1, the BET surface areas (m²/g) of the ruthenium catalysts for ammonia decomposition reaction with excellent ammonia decomposition activity according to the first to third embodiments of the present invention are "92.5, 71.3, and 64.3", respectively, which satisfy the BET surface areas (m²/g) of the ruthenium catalysts for ammonia decomposition reaction with excellent ammonia decomposition activity according to the present invention, which are "50 to 93".

In contrast, the BET surface areas (m²/g) of the ruthenium catalysts for ammonia decomposition reaction according to the first and second comparative examples, which are outside the range of containing lanthanum (La) in the carrier of the present invention, are "93.5 and 46.9", respectively, which are outside the BET surface areas (m²/g) of the ruthenium catalysts for ammonia decomposition reaction with excellent ammonia decomposition activity according to the present invention, which are "50 to 93".

### <Measurement of ammonia conversion rate>

The ammonia decomposition reaction was performed using each of the catalysts produced in the first to third embodiments and first and second comparative examples, and the ammonia conversion rate was measured.

In this measurement, the ammonia decomposition resolution was measured under the conditions of an ammonia space velocity GHSV of 3,000 ml/(g_{cat}·h) at atmospheric pressure and reaction temperatures of 450°C, 500°C, 550°C, and 600°C, and the ammonia conversion rate based on this was shown in Table 2 below (see FIG. 2).

**[Table 2]**

| Type | Ammonia conversion rate according to reaction temperature | | | |
|---|---|---|---|---|
| | 450°C | 500°C | 550°C | 600°C |
| 1^{st} embodiment | 65.2 | 96.9 | 99.8 | 100 |
| 2^{nd} embodiment | 69.1 | 97.1 | 99.8 | 100 |
| 3^{rd} embodiment | 59.0 | 93.6 | 99.3 | 100 |
| 1^{st} comparative example | 49.0 | 86.9 | 99.0 | 100 |
| 2^{nd} comparative example | 37.6 | 78.1 | 98.6 | 100 |

As shown in Table 2, the first to third embodiments regarding the ruthenium catalyst for ammonia decomposition reaction having excellent ammonia decomposition activity of the present invention exhibited a conversion rate of 93.6% or more at a reaction temperature of 500°C. Even at a reaction temperature of 550°C, both the first and second embodiments exhibited conversion rates of 99.8%, nearly 100%, and the third embodiment also exhibited a conversion rate of 99.3%. That is, all the first to third embodiments exhibited conversion rates exceeding 99%.

In contrast, the first comparative example exhibited about 99.0%, and the second comparative example exhibited 98.6%. That is, both exhibited conversion rates of 99% or less.

In addition, even at a reaction temperature of 450°C, the first and second comparative examples showed conversion rates of 49.0% and 37.6%, respectively, which are lower than 50%, whereas the first to third embodiments showed conversion rates of 65.2%, 69.1%, and 59.0%, respectively, which are about 60% or higher.

The scope of the present invention is not limited to the above-described embodiments, and the present invention can be implemented in various forms of embodiments within the scope of the appended claims. It is deemed that the scope of claims of the present invention extends to various ranges in which modifications can be made by anyone skilled in the art without departing from the subject matter of the present invention recited in claims.

Although the technical solution and specific embodiments of the present invention have been described above, it will be understood that these embodiments are merely illustrative of the technical idea and principles of the present invention. It will be apparent to those skilled in the art that various modifications and changes can be made to the present invention without departing from the subject matter of the present invention and the scope of the appended claims.

### [Industrial Applicability]

As described above, the catalysts of the first to third embodiments, which are ruthenium catalysts for ammonia decomposition reaction with excellent ammonia decomposition activity according to the present invention, exhibit conversion rates of almost 100% at a reaction temperature of 550°C, further exhibit conversion rates of 93.6% or higher even at 500°C, and also exhibit conversion rates of about 60% or higher even at a low reaction temperature of 450°C. Therefore, they can be applied to mass production of hydrogen by ammonia decomposition reaction even at relatively low temperatures, and have an excellent economic effect in a process of producing hydrogen from ammonia.

## Claims

1. A ruthenium catalyst (Ru-LaAlO₃) for ammonia decomposition reaction, comprising:
lanthanum aluminate (LaAlO₃) of lanthanum-doped alumina as a carrier, and
ruthenium (Ru) as an active metal,
wherein with respect to the lanthanum aluminate (LaAlO₃) of lanthanum-doped alumina which is the carrier, lanthanum is contained in an amount of 12 mol% to 19 mol%.

2. The ruthenium catalyst of claim 1, wherein an amount of ruthenium in the ruthenium catalyst (Ru/LaAlO₃) for ammonia decomposition reaction is 0.5 wt% to 5 wt%.

3. The ruthenium catalyst of claim 1, wherein a BET surface area (m²/g) of ruthenium in the ruthenium catalyst (Ru/LaAlO₃) for ammonia decomposition reaction has a range of "50 to 93".

4. The ruthenium catalyst of claim 1, wherein with respect to the lanthanum aluminate (LaAlO₃) of lanthanum-doped alumina which is the carrier, lanthanum is contained in an amount of 13 mol% to 19 mol%.

5. The ruthenium catalyst of claim 1, wherein with respect to the lanthanum aluminate (LaAlO₃) of lanthanum-doped alumina which is the carrier, lanthanum is contained in an amount of 13 mol% to 18 mol%.

6. A method for producing a ruthenium catalyst for ammonia decomposition reaction, comprising:
a) a step of producing a lanthanum-doped alumina carrier including lanthanum aluminate (LaAlO₃) having a perovskite structure by doping lanthanum into alumina ('first step of producing a lanthanum aluminate carrier'); and
b) a step of obtaining an ammonia decomposition reaction ruthenium catalyst having excellent ammonia decomposition activity in which ruthenium is supported on lanthanum aluminate by providing ruthenium to the lanthanum aluminate carrier ('second step of producing the ammonia decomposition reaction ruthenium catalyst having excellent ammonia decomposition activity'),
wherein the first step of producing the lanthanum aluminate carrier includes:
i) a step of preparing a lanthanum aqueous solution of a lanthanum precursor compound and water ('first-first step of preparing the lanthanum aqueous solution');
ii) a step of obtaining lanthanum-doped alumina by mixing the lanthanum aqueous solution with alumina and then performing a heating reaction and removing water ('first-second step of obtaining the lanthanum-doped alumina'); and
iii) a step of obtaining a carrier of lanthanum aluminate by drying and calcining the obtained lanthanum-doped alumina ('first-third step of obtaining the lanthanum aluminate carrier'),
wherein in the first-first step, a ratio (parts by weight) of lanthanum precursor compound to water used is 1: 2 to 1:20,
wherein in the first-second step, an amount of alumina used is 3.5 to 7 times (molar ratio) an amount of lanthanum (La) in the lanthanum precursor compound of the first-first step, and
wherein when the molar ratio of alumina and lanthanum (La) is used, the lanthanum (La) is included in an amount of 12 mol% to 19 mol% with respect to the lanthanum aluminate carrier obtained in the first-third step.

7. The method of claim 6, wherein the heating reaction in the first-second step is performed at 50°C to 100°C for 1 to 10 hours, and
wherein the removal of water in the first-second step is performed by ① reducing pressure in the heating reaction or (2) using a filter for a product, which is alumina impregnated with lanthanum, after the heating reaction.

8. The method of claim 6, wherein in the first-third step, the drying is performed at 100°C to 200°C for 1 to 24 hours, and
wherein the calcining includes (a) primary calcining at 200°C to 500°C for 5 to 12 hours, and (b) secondary calcining at 500°C to 1200°C for 1 to 10 hours.

9. The method of claim 6, wherein the second step of producing the catalyst includes:
i) a step of producing a ruthenium precursor compound solution by dissolving a ruthenium precursor compound in a mixed solvent of water and alcohol ('second-first step of producing the ruthenium precursor compound solution');
ii) a step of producing a ruthenium-doped lanthanum aluminate pellet by mixing the lanthanum aluminate (LaAlO₃) carrier obtained in the first-third step into the produced solution and then removing the solvent contained in the solution using a reduced pressure distillation unit at a constant temperature ('second-second step of producing the ruthenium-doped lanthanum aluminate pellet'); and
iii) a step of obtaining an ammonia decomposition reaction ruthenium catalyst (Ru-LaAlO₃) having excellent ammonia decomposition activity in which ruthenium is supported on lanthanum aluminate by drying and reducing the ruthenium-doped lanthanum aluminate pellet ('second-third step of obtaining the ruthenium catalyst'),
wherein in the second-first step, the ruthenium precursor compound is ruthenium chloride, ruthenium nitride, ruthenium acetylacetonate, or ruthenium iodide,
wherein in the second-first step, a volume ratio of water to alcohol is 1:0.5 to 1:1.5, and
wherein in the second-first step, the alcohol is at least one selected from the group consisting of methanol, ethanol, propanol, butanol, glycerol, glycol, ethylene glycol, diethylene glycol, triethylene glycol, butanediol, tetraethylene glycol, propylene glycol, polyethylene glycol, polypropylene glycol, 1,2-pentadiol, and 1,2-hexadiol.

10. The method of claim 6, wherein in the second-first step, an amount of the mixed solution of water and alcohol used is 50 to 200 times (weight ratio) relative to 1 part by weight of the ruthenium precursor compound,
wherein in the second-first step, the dissolving is performed at 50°C to 100°C,
wherein in the second-first step, the ruthenium precursor compound is used in an amount of 1 to 40 parts by weight relative to 100 parts by weight of the lanthanum aluminate carrier, and
wherein an amount of the ruthenium precursor compound used for the lanthanum aluminate carrier, and ruthenium in the ruthenium catalyst for ammonia decomposition reaction obtained through the drying and reducing in the second-third step, are included in an amount of 0.5 to 5 wt% relative to the entire ruthenium catalyst for ammonia decomposition reaction.

11. The method of claim 6, wherein in the second-second step, the temperature of the reduced pressure distillation unit for solvent removal is 50°C to 150°C, and the solvent is gradually removed for 1 to 5 hours,
wherein in the second-third step, the drying of the ruthenium-doped lanthanum aluminate pellet is performed using a typical dryer at a temperature of 100°C to 200°C for 5 to 24 hours,
wherein the reducing is performed by filling the ruthenium-doped lanthanum aluminate pellet in a tubular furnace and then treating the pellet at 500°C to 1,500°C for 1 to 5 hours using hydrogen gas, and
wherein the hydrogen gas is used by being diluted in an inert gas such as nitrogen at 1 to 20 vol%.
